# FASCICULE DE BREVET EUROPEEN

(11) **EP 3 083 300 B1**
(45) Date de publication et mention de la délivrance du brevet: **08.04.2020**
(21) Numéro de dépôt: 14821763.1
(22) Date de dépôt: 01.12.2014
(51) Int. Cl.: B60J 10/30, B60J 10/34, B60J 10/36

(54) **JOINT EN ÉLASTOMÈRE POUR RÉALISER L'ÉTANCHÉITÉ D'UN OUVRANT DE VÉHICULE AUTOMOBILE**
ELASTOMERDICHTUNG FÜR EINE KFZ-ÖFFNUNG
ELASTOMER SEALING FOR AN AUTOMOTIVE OPENING

(30) Priorité: 17.12.2013 FR 1362738
(43) Date de publication de la demande: 26.10.2016
(73) Titulaire: PSA Automobiles SA, 78300 Poissy (FR)
(72) Inventeur: MAUVAIS, Frédéric, 25150 Autechaux Roide (FR); LUKASIEWICZ, Stéphane, 25550 Bavans (FR)
(74) Mandataire: Fernandez, Francis Lionel
(86) Numéro de dépôt international: PCT/FR2014/053096
(87) Numéro de publication internationale: WO 2015/092190

(56) Documents cités:
- EP-A1- 1 466 770
- GB-A- 2 024 294
- JP-A- 2011 084 126
- JP-A- 2011 116 225
- US-B1- 6 405 489

## Description

La présente invention concerne un joint en élastomère pour réaliser l'étanchéité entre un ouvrant tel qu'une porte latérale de véhicule automobile et la caisse de ce véhicule, comme connus des documents US-6405489 et JP 2011-116225.

La figure 1 est une vue en coupe verticale de la partie supérieure 1 d'un côté d'habitacle de la caisse d'un véhicule automobile et de la partie supérieure 2 d'une porte latérale en position fermée.

La figure 2 est une vue en plan montrant les deux lèvres 6 du joint 3.

L'étanchéité vis-à-vis des eaux de pluie ou de lavage est assurée par un joint tubulaire 3 en caoutchouc ou élastomère fixé entre la porte et la caisse.

Ce joint 3 est creux et comprend une partie plane 4 qui est destinée à être appliquée contre la partie supérieure 1 du côté d'habitacle grâce à une agrafe 5 pouvant s'encliqueter dans un trou 7 réalisé dans la caisse.

Cette partie plane 4 du joint 3 comporte deux lèvres 6 pouvant s'appliquer sur le côté d'habitacle du véhicule.

Ces lèvres 6 sont extrudées en même temps que le reste du joint 3.

L'expérience a montré que malgré ces deux lèvres 6, le joint 3 n'assurait pas parfaitement l'étanchéité vis-à-vis des eaux de pluie ou de lavage.

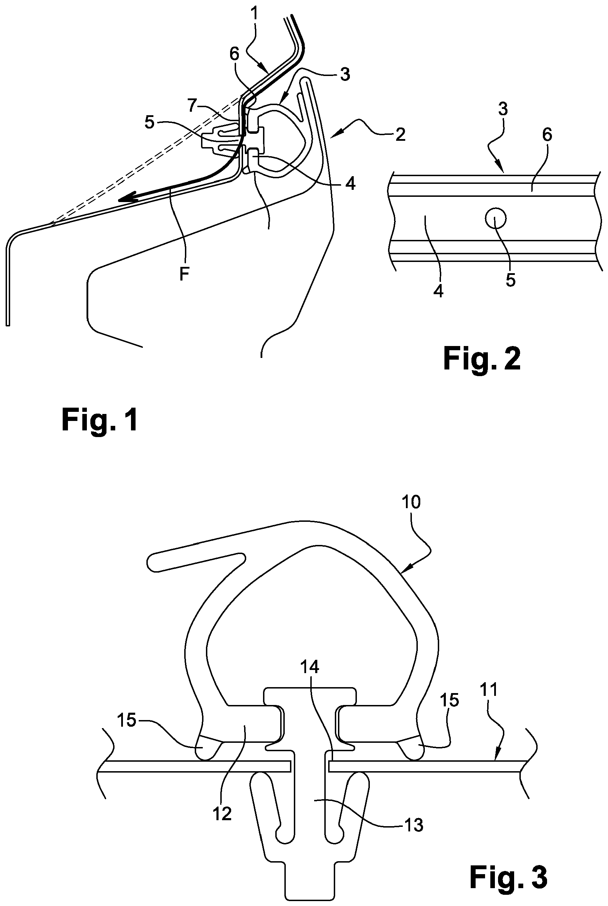

La figure 1 montre, par une flèche F, le trajet de ruissellement de l'eau passant entre le bord supérieur 2 de la porte et la partie supérieure 1 du côté d'habitacle.

Lors de ce ruissellement, l'eau parvient à s'infiltrer à l'intérieur de la caisse en passant par le trou 7 de fixation de l'agrafe 5.

Cette infiltration d'eau peut engendrer de la corrosion.

Le but de la présente invention est de remédier à ces inconvénients.

Ce but est atteint, selon l'invention, grâce à un joint en élastomère pour réaliser l'étanchéité entre un ouvrant de véhicule automobile et la caisse de ce véhicule, ce joint comprenant une partie qui est destinée à être appliquée sur la caisse grâce à une agrafe pouvant s'encliqueter dans un trou réalisé dans la caisse, ladite partie comportant deux lèvres pouvant s'appuyer sur la caisse de part et d'autre dudit trou, caractérisé en ce que lesdites lèvres sont constituées par une matière adhésive qui est :
- soit distincte de l'élastomère qui constitue le reste du joint et qui ne cuit pas à la température de vulcanisation dudit élastomère,
- soit identique à cet élastomère mais que l'on empêche de cuire lors de la vulcanisation dudit élastomère pour que ladite matière reste adhésive.

Ainsi, dans les deux cas, la matière constituant les deux lèvres du joint reste adhésive malgré la vulcanisation de l'élastomère constituant le reste du joint.

Le fait que ces deux lèvres soient adhésives permet d'assurer l'étanchéité du joint.

En effet, grâce à cette adhérence, ces lèvres forment une barrière étanche vis-à-vis des eaux de ruissellement.

De préférence, lesdites lèvres sont obtenues par coextrusion avec le reste du joint au moyen d'une filière.

Cette coextrusion permet de réaliser les lèvres dans une matière différente de celle du reste du joint, telle que le SEBS qui ne cuit pas à la température de vulcanisation de l'élastomère constituant le reste du joint.

On peut également obtenir les lèvres par coextrusion d'une matière identique à celle du reste du joint et en plaçant dans la filière une protection pour empêcher la cuisson de la matière constituant lesdites lèvres.

Dans un mode de réalisation préféré de l'invention, les deux lèvres sont parallèles à la longueur du joint.

Selon un autre aspect, l'invention concerne également un ouvrant de véhicule automobile et en particulier une porte latérale comportant un joint d'étanchéité selon l'invention.

D'autres particularités et avantages de l'invention apparaîtront encore tout au long de la description ci-après.

Aux dessins annexés, donnés à titre d'exemples, non limitatifs :
- la figure 3 est une vue en coupe transversale d'un joint d'étanchéité selon l'invention en position sur une paroi de la caisse d'un véhicule automobile.

La figure 3 représente un joint 10 en élastomère selon l'invention pour réaliser l'étanchéité entre un ouvrant tel qu'une porte de véhicule automobile et la caisse 11 de ce véhicule.

Ce joint 10 est tubulaire et comprend une partie plane 12 qui est destinée à être appliquée sur la caisse 11 grâce à une agrafe 13 pouvant s'encliqueter dans un trou 14 réalisé dans la caisse 11.

La partie plane 12 du joint comporte deux lèvres 15 pouvant s'appuyer sur la caisse 11 de part et d'autre du trou 14 de passage de l'agrafe 13.

Conformément à l'invention, les deux lèvres 15 sont constituées par une matière adhésive qui est :
- soit distincte de l'élastomère qui constitue le reste du joint 10 et qui ne cuit pas à la température de vulcanisation de cet élastomère,
- soit identique à cet élastomère mais que l'on empêche de cuire lors de la vulcanisation de cet élastomère.

Ainsi, la matière constituant les lèvres 15 reste adhésive et de ce fait, ces lèvres 15 sont en mesure d'assurer la fonction d'étanchéité.

De préférence, les deux lèvres 15 sont obtenues par coextrusion avec le reste du joint 10 au moyen d'une filière.

Dans un premier mode de réalisation, les lèvres sont réalisées d'une matière différente de celle du reste du joint et sont obtenues par coextrusion de SEBS avec le reste du joint 10.

Cette matière ne cuit pas à la température de vulcanisation égale à 200°C de l'EPDM qui est l'élastomère préféré du joint 10.

Dans un second mode de réalisation, les lèvres 15 sont obtenues par coextrusion d'une matière identique à celle du reste du joint 10 en plaçant dans la filière une protection pour empêcher la cuisson de la matière constituant les lèvres 15.

Ainsi, dans le cas où le joint 10 et les lèvres 15 sont coextrudés en EPDM, il faut mettre en place une protection pour éviter que l'EPDM des lèvres 15 dépasse 200°C.

Dans ces conditions, les lèvres 15 restent adhésives, ce qui leur permet d'assurer l'étanchéité vis-à-vis des ruissellements d'eau.

De préférence, les deux lèvres 15 sont parallèles et disposées de part et d'autre des agrafes 13 et des trous de passage 14 réalisés dans la paroi 11 de la caisse.

Les deux lèvres 15 forment ainsi chacune une barrière étanche vis-à-vis des ruissellements d'eau.

## Revendications

1. Joint (10) en élastomère pour réaliser l'étanchéité entre un ouvrant de véhicule automobile et la caisse (11) de ce véhicule, ce joint (10) comprenant une partie (12) qui est destinée à être appliquée sur la caisse (11) grâce à une agrafe (13) pouvant s'encliqueter dans un trou (14) réalisé dans la caisse (11), ladite partie (12) comportant deux lèvres (15) pouvant s'appuyer sur la caisse (11) de part et d'autre dudit trou (14), **caractérisé en ce que** lesdites lèvres (15) sont constituées par une matière adhésive qui est :
- soit, dans une première variante, distincte de l'élastomère qui constitue le reste du joint (10) et qui ne cuit pas à la température de vulcanisation dudit élastomère,
- soit, dans une deuxième variante, identique à cet élastomère mais que l'on empêche de cuire lors de la vulcanisation dudit élastomère pour que ladite matière reste adhésive.

2. Joint en élastomère selon la revendication 1, **caractérisé en ce que** lesdites lèvres (15) sont obtenues par coextrusion avec le reste du joint (10) au moyen d'une filière.

3. Joint en élastomère selon la revendication 2, **caractérisé en ce que**, dans la première variante, lesdites lèvres (15) sont obtenues par coextrusion de SEBS avec le reste du joint (10).

4. Joint en élastomère selon la revendication 2, **caractérisé en ce que**, dans la seconde variante, lesdites lèvres (15) sont obtenues par coextrusion d'une matière identique à celle du reste du joint (10) et en plaçant dans la filière une protection pour empêcher la cuisson de la matière constituant lesdites lèvres (15).

5. Joint en élastomère selon l'une des revendications 2 à 4, **caractérisé en ce que** les deux lèvres (15) sont parallèles à la longueur du joint (10).

6. Véhicule automobile comportant au moins un joint d'étanchéité (10) selon l'une des revendications 1 à 5.

## Patentansprüche

1. Dichtung (10) aus Elastomer zum Herstellen der Abdichtung zwischen einer Kraftfahrzeugöffnung und der Karosserie (11) dieses Fahrzeugs, wobei diese Dichtung (10) einen Teil (12) umfasst, der dazu bestimmt ist, auf der Karosserie (11) dank einer Klammer (13), die in eine Bohrung (14), die in der Karosserie (11) hergestellt ist, einrasten kann, angelegt zu sein, wobei der Teil (12) zwei Lippen (15) umfasst, die sich auf die Karosserie (11) zu beiden Seiten der Bohrung (14) auflegen können, **dadurch gekennzeichnet, dass** die Lippen (15) aus einem haftenden Material bestehen, das:
- entweder, bei einer ersten Variante, von dem Elastomer, das den Rest der Dichtung (10) bildet, getrennt ist und bei der Vulkanisierungstemperatur des Elastomers nicht aushärtet,
- oder, bei einer zweiten Variante, mit diesem Elastomer identisch ist, das aber bei der Vulkanisierung des Elastomers am Aushärten gehindert wird, damit das Material haftend bleibt.

2. Elastomerdichtung nach Anspruch 1, **dadurch gekennzeichnet, dass** die Lippen (15) durch Coextrusion mit dem Rest der Dichtung (10) mittels einer Ziehdüse erhalten werden.

3. Elastomerdichtung nach Anspruch 2, **dadurch gekennzeichnet, dass** die Lippen (15) bei der ersten Variante durch Coextrusion von SEBS mit dem Rest der Dichtung (10) erhalten werden.

4. Elastomerdichtung nach Anspruch 2, **dadurch gekennzeichnet, dass** die Lippen (15) bei der zweiten Variante durch Coextrusion eines Materials, das mit dem des Rests der Dichtung (10) identisch ist, erhalten werden, und indem in der Ziehdüse ein Schutz platziert wird, um das Aushärten des Materials, das die Lippen (15) bildet, zu verhindern.

5. Elastomerdichtung nach einem der Ansprüche 2 bis 4, **dadurch gekennzeichnet, dass** die zwei Lippen (15) zu der Länge der Dichtung (10) parallel sind.

6. Kraftfahrzeug, das mindestens eine Dichtung (10) nach einem der Ansprüche 1 bis 5 umfasst.

## Claims

1. An elastomer seal (10) for sealing between a motor vehicle opening panel and the body (11) of this vehicle, this seal (10) including a part (12) which is intended to be applied on the body (11) due to a clip (13) which is able to clip into a hole (14) formed in the body (11), said part (12) comprising two lips (15) able to press on the body (11) on each side of said hole (14), **characterized in that** said lips (15) are constituted by an adhesive material which is:
- either, in a first variant, distinct from the elastomer which constitutes the remainder of the seal (10) and which is not cured at the vulcanization temperature of said elastomer,
- or, in a second variant, identical to this elastomer, but which is prevented from curing during the vulcanization of said elastomer, so that said material remains adhesive.

2. The elastomer seal according to Claim 1, **characterized in that** said lips (15) are obtained by coextrusion with the remainder of the seal (10) by means of a die.

3. The elastomer seal according to Claim 2, **characterized in that**, in the first variant, said lips (15) are obtained by coextrusion of SEBS with the remainder of the seal (10).

4. The elastomer seal according to Claim 2, **characterized in that**, in the second variant, said lips (15) are obtained by coextrusion of a material identical to that of the remainder of the seal (10) and by placing in the die a protection to prevent the curing of the material constituting said lips (15).

5. The elastomer seal according to one of Claims 2 to 4, **characterized in that** the two lips (15) are parallel to the length of the seal (10).

6. A motor vehicle comprising at least one seal (10) according to one of Claims 1 to 5.
